# EUROPÄISCHE PATENTANMELDUNG

(11) **EP 0 638 955 A1**
(43) Veröffentlichungstag der Anmeldung: **15.02.1995**
(21) Anmeldenummer: 94202203.9
(22) Anmeldetag: 28.07.1994
(51) Int. Cl.: H01Q 1/24, H01Q 1/48, H04B 1/38

(54) **Funkgerät mit einer Antenne**

(30) Priorität: 04.08.1993 DE 4326117
(71) Anmelder: Philips Patentverwaltung GmbH, 22335 Hamburg (DE); PHILIPS ELECTRONICS N.V., 5621 BA Eindhoven (NL)
(72) Erfinder: Fischer, Peter, D-20097 Hamburg (DE)
(74) Vertreter: Walz, Erich

(57) **Zusammenfassung**

Die Erfindung betrifft ein Funkgerät mit einer Antenne und einer am Fußpunkt der Antenne aus leitfähigen Material ausgebildeten Erdungsfläche.

Zur Vermeidung von gesundheitlichen Beeinträchtigungen durch elektromagnetische Strahlungen für Benutzer von tragbaren Funkgeräten schlägt die Erfindung vor, daß die Erdungsfläche so ausgebildet wird, daß sie sich im wesentlichen vom Fußpunkt der Antenne zu der Seite des Gehäuses erstreckt, die im Betrieb des Funkgerätes dem Kopf des Benutzers des Funkgerätes zugewandt ist.

## Beschreibung

Die Erfindung bezieht sich aug ein Funkgerät mit einer Antenne und einer am Fußpunkt der Antenne aus leitfähigem Material ausgebildeten Erdungsfläche.

Ein Funkgerät mit einer solchen Erdungsfläche ist beispielsweise aus JP 3-183201 bekannt. Bei diesem Funkgerät ist die Antenne in der Flächenmitte einer nach oben zeigenden Gehäusefläche des Funkgeräts angeordnet. Am Fußpunkt dieser Antenne erstreckt sich über die gesamte obere Gehäusefläche eine aus elektrisch leitfähigen Material ausgebildete Erdungsfläche, welche gegenüber der Antenne isoliert ist. Auf diese Weise wird das von der Antenne abgestrahlte elektromagnetische Feld in horizontaler Richtung ausgerichtet.

Tragbare Funkgeräte werden mittlerweile in einer so kleinen Bauform realisiert, daß sowohl elektroakustische Wandler wie Mikrofon und Hörkapsel, als auch Hochfrequenzsender und Antenne in ein und dem selben Gehäuse angeordnet werden können. Bei Benutzung eines solchen kleinen tragbaren Funkgerätes befindet sich beim bestimmungsgemäßen Gebrauch die Antenne des Funkgerätes in der Nähe des Kopfes des Benutzers. In letzter Zeit häufen sich jedoch die Besorgnisse, daß die Ausstrahlung elektromagnetischer Felder in unmittelbarer Nähe des Kopfes eines Benutzers eines solchen tragbaren Funkgerätes zu gesundheitlichen Beeinträchtigungen führen könnte.

Aufgabe der Erfindung ist es, ein Funkgerät der eingangs genannten Art anzugeben, bei welchen die gesundheitlichen Beeinträchtigungen möglichst gering sind.

Diese Aufgabe wird dadurch gelöst, daß die Erdungsfläche sich im wesentlichen vom Fußpunkt der Antenne zu der Seite des Gehäuses erstreckt, die beim Betrieb des Funkgerätes dem Kopf des Benutzers zugewandt ist.

Mit einer derartigen Formgebung der Erdungsfläche wird erreicht, daß die Abstrahlung von elektromagnetischer Energie in Richtung des Kopfes des Benutzers vermindert wird. Im Gegensatz zu Abschirmungsmaßnahmen, die zu einer Dämpfung des Hochfrequenzfeldes führen würden, ergibt sich bei dieser Lösung ein asymetrisches horizontales Strahlungsdiagramm der Antenne mit einer dem Kopf des Benutzers abgewandten Keule. Mit dem asymetrischen Hochfrequenzfeld kann sogar in den Richtungen, die dem Kopf des Benutzers abgewandt sind, bei gleicher Senderleistung sogar eine höhere Feldstärke erzielt werden. Im Gegensatz zu Abschirmmaßnahmen kann auf diese Weise die Sendeenergie sogar reduziert werden, sodaß mit dieser Maßnahme bei gleicher Batteriekapazität sogar die Standzeit der Batterie bzw. eines Akkus verlängert werden kann.

In einer bevorzugten Ausführungsform ist die Antenne auf der dem Benutzer abgewandten Gehäuseseite montiert. Auf diese Weise erhält man zum einen einen größeren Abstand zwischen Antenne und Kopf des Benutzers, zum anderen kann dadurch auch die zwischen dem Fußpunkt der Antenne und der diesem Fußpunkt gegenüberliegenden Gehäuseseite liegende Erdungsfläche vergrößert werden.

Die Erfindung wird im folgenden anhand eines in den Figuren dargestellten Ausführungsbeispiels näher beschrieben und erläutert.
Es zeigen:
Fig. 1 Seitenansicht eines Funkgerätes
Fig. 2 Ansicht von der Oberseite eines Funkgerätes.
Fig. 3 Eine andere Ausbildung der Erdungsfläche
Fig. 4 Eine weitere Ausbildung der Erdungsfläche

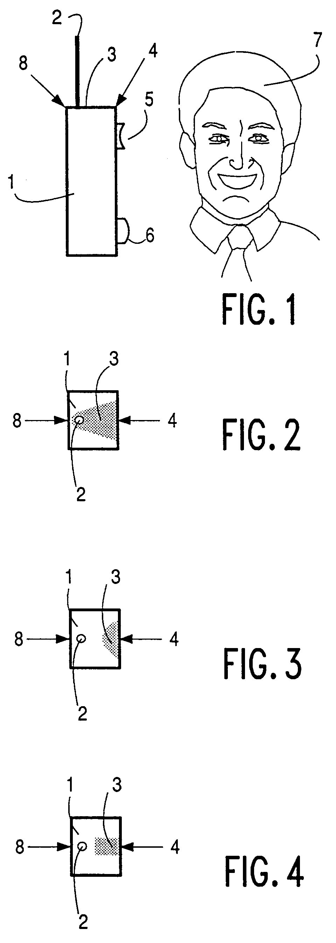

Fig. 1 zeigt ein tragbares Funkgerät 1 und dessen Position in Gebrauchslage zum Kopf 7 eines Benutzers. Die Gebrauchslage wird bestimmt durch Schallaustrittsöffnungen 5 eines Lautsprechers, die zum Ohr des Benutzers ausgerichtet sind und Schalleintrittsöffnungen 6 für ein Mikrofon, welche zum Mund des Benutzers ausgerichtet sind. Besonders kleine tragbare Funkgeräte sind so ausgebildet, daß in Gebrauchslage das Funkgerät so gehalten wird, daß die Schallaustrittsöffnungen am Ohr des Benutzers anliegen. Abweichend von dieser Darstellung sind vor allem etwas größere tragbare Funkgeräte so ausgebildet, daß sie vom Benutzer vor dessen Kopf gehalten werden.

Unabhängig ob sich in Gebrauchslage das Funkgerät freitragend vor dem Kopf des Benutzers befindet oder wie in Figur 1 seitlich am Kopf des Benutzers, das heißt am Ohr des Benutzers anliegt, existiert somit immer eine Gehäuseseite bzw. eine oberste Kante der Gehäusefläche die in Gebrauchslage dem Kopf des Benutzers am nächsten steht. Diese Gehäusefläche, beziehungsweise Gehäusekante wird im folgenden als die beim Betrieb des Funkgerätes 1 dem Kopf 7 des Benutzer zugewandte Gehäuseseite 4 bezeichnet. Die dieser Gehäusefläche, beziehungswiese Gehäusekante gegenüberstehende Gehäuseseite hat zum Kopf des Benutzers den weitesten Abstand und wird im folgenden daher als die dem Kopf des Benutzers abgewandte Gehäuseseite 8 bezeichnet.

Im Ausführungsbeispiel ist die Antenne 2 auf der in Gebrauchslage nach oben zeigenden Gehäusefläche auf der dem Benutzer abgewandten Gehäuseseite 8 angebracht. Zwischen dem Fußpunkt der Antenne und der dem Kopf des Benutzers zugewandten Gehäuseseite 4 ist in sektorieller Ausdehnung (Mittelpunkt ist der Fußpunkt der Antenne) durch eine Metallisierung der Gehäuseinnenseite in diesem Bereich senkrecht zur Antennenlängsachse eine Erdungsfläche 3 ausgebildet. Durch diese Erdungsfläche wird die Strahlungscharakteristik der Antenne 2 derart verbogen, daß der Kopfbereich des Benutzers von elektromagnetischer Strahlung weitestgehend freigehalten wird.

Mit der gegebenen technischen Lehre kann der gewünschte Effekt im Regelfall ohne allzu große Mühe erreicht werden. Andere Geometrien anderer möglicher Erdungsflächen, die sich ebenfalls im wesentlichen zwischen Antenne und der dem Benutzer zugewandten Gehäusekante erstrecken zeigen als weitere Beispiele die Figuren 3 und 4. Da das Strahlungsdiagramm der Antenne eines Funkgerätes aber auch von anderen Vorgaben, wie beispielsweise der Anordnung der Baugruppen im Funkgerät abhängt, muß ausgehend von der gegebenen Lehre die optimale geometrische Form der Erdungsfläche vom Fachmann im Einzelversuch ermittelt werden.

Anstelle der im Ausführungsbeispiel verwendeten Bedampfung der Gehäuseinnenseite ist es in das Belieben des Fachmanns gestellt welche Art der Realisierung er im Einzelfall, beispielsweise aus dem Gesichtspunkt der Fertigungskosten, als die geeigneste ansieht. Innen im Gehäuse aufgeklebte Kupferfolie beispielsweise ist vom Material sehr günstig, benötigt aber meist einen manuellen Bearbeitungsschritt. Völlig automatisiert läßt sich eine solche Erdungsfläche beispielsweise auch dadurch erreichen, daß in einem aus Kunststoffspritzteilen gefertigten Gehäuse, an den die Erdungsfläche bildenden Gehäuseflächen beim Spritzvorgang leitfähiges Material, beispielsweise Silberkörner eingebracht wird. Diese Lösung hat außerdem den Vorteil, daß sie sehr dauerhaft ist, vor allem gegenüber Lösungen bei denen die Erdungsfläche an der äußeren Gehäuseseite aufgebracht ist, und dadurch die Gefahr besteht, daß diese Erdungsfläche durch unsachgemäßen Gebrauch beschädigt wird.

## Patentansprüche

1. Funkgerät mit einer Antenne und einer am Fußpunkt der Antenne aus leitfähigem Material ausgebildeten Erdungsfläche,
dadurch gekennzeichnet,
daß bei einem tragbarem Funkgerät (1) die Erdungsfläche (3) im wesentlichen sich vom Fußpunkt der Antenne (2) zu der Seite (4) des Gehäuses erstreckt, die im Betrieb des Funkgerätes dem Kopf (7) eines Benutzers des Funkgerätes (1) zugewandt ist.

2. Funkgerät nach Anspruch 1,
dadurch gekennzeichnet,
daß die Antenne (2) auf der dem Benutzer abgewandten Gehäuseseite (8) montiert ist.

3. Funkgerät nach Anspruch 1 oder 2,
dadurch gekennzeichnet,
daß die Erdungsfläche (3) durch Einbringung von leitfähigem Material in das Gehäusematerial an den entsprechenden Gehäuseflächen erzielt wird.
